# EUROPEAN PATENT SPECIFICATION

(11) **EP 0 763 682 B1**
(45) Date of publication and mention of the grant of the patent: **26.05.1999**
(21) Application number: 96202556.5
(22) Date of filing: 12.09.1996
(51) Int. Cl.: F16K 31/00, F16K 31/46, G05D 23/12, F24D 19/10

(54) **Remote adjustment device, in particular for a heating installation**
Ferneinstellungsgerät, insbesondere für eine Heizungsanlage
Dispositif pour le réglage à distance, en particulier pour une installation de chauffage

(30) Priority: 15.09.1995 DE 19534181
(43) Date of publication of application: 19.03.1997
(73) Proprietor: Danfoss A/S, 6430 Nordborg (DK)
(72) Inventor: Frederiksen, Bjarne, 8600 Silkeborg (DK); Person, Stig Gron, 8462 Harlev J. (DK); Nissen, Morten Paasch, 8240 Risskov (DK); Andersen, Erik Haarbo, 8900 Randers (DK); Markvart, Arne, 8600 Silkeborg (DK)

(56) References cited:
- DE-A- 2 521 161
- DE-A- 2 617 325
- GB-A- 1 028 629
- GB-A- 2 131 126
- US-A- 4 214 698

## Description

The invention relates to a remote adjustment device, in particular for a heating installation, having an adjusting element which is connected by way of a capillary tube to an operating element, an attachment device for a mounting and pulling device being provided on the operating element.

Such remote adjustment devices are used, for example, when the heating installation, for example, a radiator, is not easily accessible, as in under-floor convector heaters, convector heaters in a covered radiator alcove or for radiators that are housed in ventilation ducts. Such heating installations then have a radiator valve or similar means that can be regulated by the operating element. The operating element in turn is connected by way of the capillary tube to the adjusting element. The adjusting element normally comprises a means to adjust the set-point and a thermostatic device, for example, a pressure chamber filled with an expandable fluid.

In many cases it is desirable to install the capillary tube invisibly between the operating element and the adjusting element. That is not only for visual reasons. A capillary tube that is installed so that it is invisible can be better protected against damage than a capillary tube which, for example, is located on the surface of a wall. The capillary tube is therefore hidden, for example, in an empty tube, such as those also used for installing electrical wiring.

Furthermore, it is possible for the adjusting element to be housed in a different room from the operating element. In that case the capillary tube has to pass through the wall separating the two rooms. In the case of floor heating systems or so-called "distributor solutions" in which all valves are combined centrally at one location, connections between the heat sensors and the valves also have, in general, to be effected through walls.

Since the operating element is generally connected in a fluid-tight manner to the capillary tube and this tube in turn is connected in a fluid-tight manner to the adjusting element, the operating element is drawn through the empty tube or the opening in the wall by means of a line or a chain. For that purpose, as is known from DE-A-2 617 325 (which forms a basis for the preamble of claim 1), an attachment device for the chain in the form of a pulling eye is mounted on the operating element. The chain or line is then passed through the empty tube or the opening, joined to the pulling eye and then the operating element with the capillary tube hanging thereon is pulled through.

In this operation, however, considerable external mechanical forces act on the operating element, and may possibly lead to deformation and thus to inaccurate operation thereof or in the worst case to damage of the operating element.

The invention is based on the problem of simplifying the mounting of a remote adjustment device.

This problem is solved in a remote adjustment device of the kind mentioned in the introduction in that the attachment device is arranged at the end of the operating element into which also the capillary tube opens.

With this construction, the pulling force of the attachment device is no longer passed over the entire length of the operating element, which would entail the risk of damage. The pulling force acts on the operating element only in a very small region. With no appreciable increase in cost and virtually without effect on the operability of the operating element, this region can be constructed to be sufficiently stable to transfer the pulling forces. In that case, one must ensure that the diameter of the empty tube or of the opening through which the operating element is pulled is large enough for the operating element and the capillary tube to fit in side by side, but this is usually the case anyway. The greatest resistance to pull is encountered as the operating element is being pulled through. When the operating element fits through the empty tube or the opening in the wall, the capillary tube can follow without difficulty. With the new construction, the greatest pulling force is then applied just where the greatest resistance is expected to be. Mounting is also safer, since both the weld joint of the capillary tube with the sensor and the bellows are protected. The same procedure is also, of course, applicable to radiator thermostat valves that are remote-controlled by an external temperature sensor.

The operating element preferably has a housing part with which the capillary tube is connected and on which the attachment device acts. Only this housing part needs to be made sufficiently stable to absorb the pulling force of the attachment device. Such a housing part can be relatively small, so that the additional effort that will be involved remains minimal.

The attachment device is preferably constructed as an attachment housing which at least partly surrounds the operating element and engages beneath a projection provided on the operating element. The attachment housing is therefore constructed as a separate component which is brought into interlocking engagement merely with the operating element, or more precisely, with a projection provided thereon. Complicated production measures, such as the attachment of a securing eye by soldering or welding for instance, are unnecessary. The attachment housing, which can be manufactured for example, from plastics material, can be provided with this securing eye (or other securing element) as it is being manufactured. Shaping of the parts becomes considerably easier.

The attachment housing is advantageously composed of at least two parts which surround the circumference of the operating element in respective sections. The attachment of the attachment housing to the operating element is consequently also very simple. The parts of the attachment housing can be mounted on the operating element from several sides and can then be connected to one another. In that case, the parts can be moved parallel to the projection. Between the projection and the attachment housing there can therefore be a relatively long engagement length which in turn has positive effects as regards the forces to be transferred. The risk that the attachment housing will become detached from the operating element therefore decreases.

The parts preferably engage one another by means of snap-in locking connections. They then require merely to be put onto the operating element from the sides and then to be pressed together. They then lock in and ensure a simple yet adequate connection. The snap-in locking connection need not in that case be especially strong, because the load on it is only very slight. The pulling forces can in fact act at right angles to the effective direction of the snap-in locking connection.

In an especially preferred practical form, provision is made for all parts to be the same. This simplifies assembly. Pre-sorting of parts which fit with one another is not needed. An assembly operator or automatic production machine can take up two or more parts at random and fit them to the attachment housing. The practical form is especially simple if only two parts form the attachment housing. Production becomes cheaper because only a single manufacturing tool is required.

The attachment housing preferably has a pulling eye formed jointly through all parts. This pulling eye can be open or closed. Because the pulling eye is formed in common through all parts, when a pulling line or pulling chain, or in general the mounting and pulling device, is threaded through, an additional connection between the parts of the attachment housing is provided. The danger that the attachment housing will become detached from the operating element is thus kept small.

The attachment housing preferably covers over the connection between capillary tube and operating element. The danger that this connection, which is especially at risk, will be damaged during mounting is thus kept small.

In an especially preferred practical form, provision is made for the operating element to be arranged in a housing top part which has an end-face opening into which the operating element is inserted, the end-face opening being surrounded by a circumferential projection interrupted by at least one aperture and the attachment device having a number of engagement members corresponding to the number of apertures, the width of the engagement members being at most the width of the apertures. The attachment device is therefore used not only for pulling the operating element through an empty tube or a wall opening. It also serves to fasten the operating element in the housing top part. The housing top part in turn holds the operating element on the radiator valve or another device which is intended to control the heat output of the radiator. It is not even necessary to remove the attachment device to install the operating element. On the contrary, the attachment device is additionally used to hold the operating element reliably in the housing top part. For that purpose the engagement member or members are passed through the apertures and the operating element or attachment device is then turned so that the engagement members come to lie beneath the projection. The operating element is thus held in the manner of a bayonet closure in the housing top part. A rapid and reliable assembly and a relatively accurate positioning of the operating element in the housing top part is consequently achieved. If a compression spring is arranged between the housing top part and the attachment device, an even better safeguard is achieved. Then, the force of the spring must first be overcome before the attachment device can be turned relative to the housing top part.

It is also preferable for the projection to have on its side facing the inside of the housing top part a number of recesses corresponding to the number of engagement members. The engagement members are then able to lock into these recesses so that the risk that the attachment device will accidentally become detached is relatively small.

The invention is described hereinafter with reference to a preferred embodiment in conjunction with the drawings, in which:
- Fig. 1: is a diagrammatic section through a housing top part with operating element and attachment device,
- Fig. 2: is a section II-II according to Fig. 1,
- Fig. 3: is a plan view and a partial section through an attachment housing,
- Fig. 4: is a front view of a part of the attachment housing,
- Fig. 5: is a side view of the attachment housing, partly in section, and
- Fig. 6: is a section through a part of the attachment housing.

A remote adjustment device 1 for a heating installation, not illustrated, has an adjusting element 2, illustrated merely diagrammatically, which is connected by way of a capillary tube 3 to an operating element 4. The operating element 4 is arranged in a housing top part 5 and acts on a valve 6 of a radiator, not illustrated, or more accurately, on the tappet 7 of the valve.

For that purpose the operating element 4 has in known manner a pressure chamber 8 which is surrounded at least partly by a corrugated tube or bellows 9. On changes in the volume of fluid contained in the pressure chamber 8, the fluid being admitted or discharged through the capillary tube 3, the bellows 9 displaces the tappet 7 by way of an intermediate member 10 which is biassed by a spring 11. Such a construction is generally well-known, however, for example, from DE 26 17 325 B2 mentioned initially and will not therefore be discussed further.

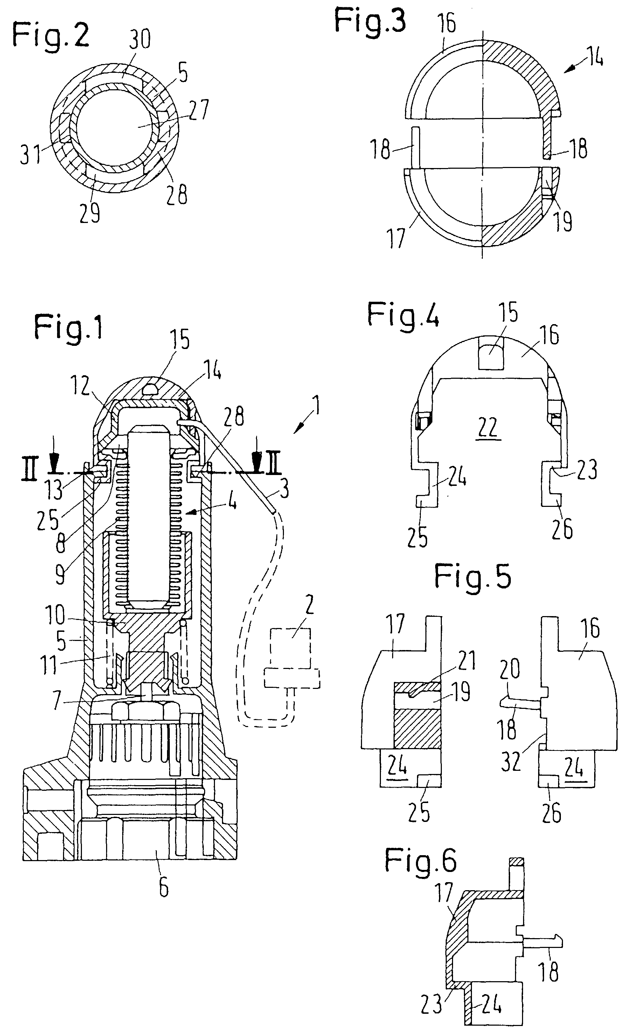

On the end opposite the intermediate member 10 the pressure chamber 8 is closed by a housing part 12, which has a larger diameter than the bellows 9. The housing part 12 thus forms a circumferential projection 13, behind which there engages an attachment housing 14 explained in further detail later in conjunction with Figs 3 to 6. The capillary tube 3 also passes right through the housing part 12 so that it is in connection with the pressure chamber 8. The housing part 12 is of relatively stable construction. It is easy to see that traction that is transferred to the housing part 12 by way of a pulling eye 15 in the attachment housing 14 can be transferred also directly to the capillary tube 3 without the operating element 4 being otherwise affected. Both the securing of the capillary tube 3 to the housing 12 and also the bellows 9 are well protected during pulling.

The attachment housing 14, which is illustrated in Figs 3 to 6 partly in section, consists of two parts 16, 17 which are of identical construction and can brought from opposing sides into engagement with the circumference of the housing part 12. When the two housing parts 16, 17 are pressed against one another, a resilient tongue 18 on the housing part 16 is introduced into an opening 19 in the housing part 17. The resilient tongue 18 has a triangular projection 20. A matching projection 21 behind which the projection 20 locks is arranged in the opening 19. The resilient tongue 18 with projection 20, together with the opening 19 and its projection 21, therefore forms a snap-in locking connection, which is closed when the two parts are moved towards one another. Of course, the part 17 also has such a resilient tongue 18 and the part 16 also has a corresponding opening, since both parts 16, 17 are the same as each other.

Each of the two parts 16, 17 of the attachment housing 14 therefore surrounds the housing part 12 for a part of its circumference. The housing part 12 is here received in a cavity 22 formed by the two parts 16, 17.

The cavity 22 becomes narrower towards the operating element 4 so that it forms a circumferential shoulder 23 that engages behind the projection 13 on the housing part 12. The shoulder 23 forms one end of a neck 24. Respective diametrically opposite engagement member parts 25, 26 are arranged on the parts 16, 17 at the other end of the neck 24, an engagement member part 25 of the one part 16 of the attachment housing 14 forming an engagement member together with the other engagement member part 26 of the other part 17 of the attachment housing 14.

The housing top part 5 has on its end face remote from the valve 6 an opening 27 which is surrounded by a circumferential projection 28. The projection 28 in turn has two apertures 29, 30 which are wider than the placed-together engagement members 25, 26. The attachment housing 14 can therefore be guided with its engagement members into the opening 27 and through the apertures 29, 30. When the attachment housing 14 is turned relative to the housing top part 5, for example, through 90°, the two engagement members 25, 26 engage beneath the projection 28 so that the attachment housing 14 is reliably held in the housing top part 5. Accordingly, the operating element 4 is also fixedly held in the housing top part. This state is illustrated in Fig. 1.

The projection 28 has on its side facing the inside of the housing top part 5, that is, the side facing the valve 6, recesses 31 into which the engagement members 25, 26 are able to lock.

Assembly of such a remote adjustment device 1 is very simple. After mounting the adjusting element and providing an empty tube, not illustrated, the attachment housing 14 merely requires to be connected to the remote adjustment device 1. For that purpose the two parts 16, 17 of the attachment housing 14 are brought from two sides into engagement with the housing part 12 of the operating element 4. If desired, they can be pre-mounted. By pressing together the two parts 16, 17, they lock in and against one another and then engage behind the housing part 12. A pulling line or other pulling device can be passed through the pulling eye 15 for assembly. The pulling eye 15 is in this case provided on both parts 16, 17 of the attachment housing 14 so that applying the pulling device provides a further connection of the two housing parts 16, 17 to one another. Using the pulling device, the operating element 4, together with the capillary tube 3 hanging thereon, is then pulled through the empty tube until it has reached the desired assembly site. The attachment housing 14 is constructed so that it presents as little resistance as possible to pulling through the empty tube. The housing top part in which the operating element 4 merely has to be positioned is already at the assembly site. The attachment housing 14 is passed with its engagement members 25, 26 through the apertures 29, 30 in the projection 28. After rotation through about 90°, the engagement members 25, 26 lock into the recesses 31 in the projection 28. The pulling device can be removed from the pulling eye 15 prior to or following that.

During the pulling operation, the connection between the capillary tube 3 and the operating element 4 is protected by the attachment housing 14. Moreover, this connection continues to be protected later at the mounting site. The capillary tube 3 can be lead out between the two parts 16, 17 of the attachment housing 14. If desired, apertures 32 in the parts 16, 17 can be provided for that purpose; together, the apertures form an opening through which the capillary tube 3 passes even when the parts 16, 17 are locked together with one another.

## Claims

1. A remote adjustment device (1), in particular for a heating installation, having an adjusting element (2) which is connected by way of a capillary tube (3) to an operating element (4), an attachment device (14) for a mounting and pulling device (15) being provided on the operating element (4), characterized in that the attachment device (14) is arranged at that end of the operating element (4) into which also the capillary tube (3) opens.

2. Device according to claim 1, characterized in that the operating element (4) has a housing part (12) with which the capillary tube (3) is connected and on which the attachment device (14) acts.

3. Device according to claim 1 or 2, characterized in that the attachment device is constructed as an attachment housing (14) which at least partly surrounds the operating element (4) and engages beneath a projection constructed on the operating element (4).

4. Device according to claim 3, characterized in that the attachment housing (14) is composed of at least two parts (16, 17) which surround the circumference of the operating element (4) in respective sections.

5. Device according to claim 4, characterized in that the parts (16, 17) engage one another by means of snap-in locking connections (18-21).

6. Device according to claim 4 or 5, characterized in that all parts (16, 17) are the same.

7. Device according to one of claims 4 to 6, characterized in that the attachment housing (14) has a pulling eye (15) formed in common through all parts (16, 17).

8. Device according to one of claims 3 to 7, characterized in that the attachment housing (14) covers over the connection between capillary tube (3) and operating element (4).

9. Device according to one of claims 1 to 8, characterized in that the operating element (4) is arranged in a housing top part (5) which has an end-face opening (27) into which the operating element (4) is inserted, the end-face opening (27) being surrounded by a circumferential projection (28) interrupted by at least one aperture (29, 30) and the attachment device (14) having a number of engagement members (25, 26) corresponding to the number of apertures (29, 30), the width of the engagement members (25, 26) being at most the width of the apertures (29, 30).

10. Device according to claim 9, characterized in that the projection (28) has on its side facing the inside of the housing top part (5) a number of recesses (31) corresponding to the number of engagement members (25, 26).

## Patentansprüche

1. Ferneinstellvorrichtung (1), insbesondere für eine Heizeinrichtung, mit einem Einstellelement (2), das über ein Kapillarrohr (3) mit einem Betätigungselement (4) verbunden ist, wobei am Betätigungselement (4) eine Befestigungseinrichtung (14) für eine Montage-Zugvorrichtung (15) vorgesehen ist, dadurch gekennzeichnet, daß die Befestigungseinrichtung (14) an dem Ende des Befestigungselements (4) angeordnet ist, in das auch das Kapillarrohr (3) mündet.

2. Vorrichtung nach Anspruch 1, dadurch gekennzeichnet, daß das Betätigungselement (4) ein Gehäuseteil (12) aufweist, mit dem das Kapillarrohr (3) verbunden ist und auf das die Befestigungseinrichtung (14) wirkt.

3. Vorrichtung nach Anspruch 1 oder 2, dadurch gekennzeichnet, daß Befestigungseinrichtung als Befestigungsgehäuse (14) ausgebildet, das das Betätigungselement (4) zumindest teilweise umgibt und einem am Befestigungselement (4) ausgebildeten Vorsprung hintergreift.

4. Vorrichtung nach Anspruch 3, dadurch gekennzeichnet, daß das Befestigungsgehäuse (14) aus mindestens zwei Teilen (16, 17) zusammengesetzt ist, die den Umfang des Betätigungselements (4) abschnittsweise umgeben.

5. Vorrichtung nach Anspruch 4, dadurch gekennzeichnet, daß die Teile (16, 17) über Rastverbindungen (18-21) miteinander in Eingriff stehen.

6. Vorrichtung nach Anspruch 4 oder 5, dadurch gekennzeichnet, daß alle Teile (16, 17) gleich sind.

7. Vorrichtung nach einem der Ansprüche 4 bis 6, dadurch gekennzeichnet, daß das Befestigungsgehäuse (14) eine durch alle Teile (16, 17) gemeinsam gebildete Zugöse (15) aufweist.

8. Vorrichtung nach einem der Ansprüche 3 bis 7, dadurch gekennzeichnet, daß das Befestigungsgehäuse (14) die Verbindung zwischen Kapillarrohr (3) und Betätigungselement (4) abdeckt.

9. Vorrichtung nach einem der Ansprüche 1 bis 8, dadurch gekennzeichnet, daß das Betätigungselement (4) in einem Aufsatzgehäuse (5) angeordnet ist, das eine stirnseitige Öffnung (27) aufweist, in die das Betätigungselement (4) eingesteckt ist, wobei die stirnseitige Öffnung (27) von einem umlaufenden, durch mindestens eine Ausnehmung (29, 30) unterbrochenen Vorsprung (28) umgeben ist und die Befestigungseinrichtung (14) eine der Anzahl der Ausnehmungen (29, 30) entsprechende Anzahl von Nocken (25, 26) aufweist, deren Breite höchstens der Breite der Ausnehmungen (29, 30) entspricht.

10. Vorrichtung nach Anspruch 9, dadurch gekennzeichnet, daß der Vorsprung (28) auf seiner dem Innern des Aufsatzgehäuses (5) zugewandten Seite eine der Anzahl der Nocken (25, 26) entsprechende Anzahl von Vertiefungen (31) aufweist.

## Revendications

1. Un dispositif de réglage à distance (1), en particulier pour une installation de chauffage ayant un élément de réglage (2) qui est relié au moyen d'un tube capillaire (3) à un élément d'actionnement (4), un dispositif de fixation (14) pour un dispositif de traction et de montage (15) étant prévu sur l'élément d'actionnement (4), caractérisé en ce que le dispositif de fixation (14) est agencé à cette extrémité de l'élément d'actionnement (4) dans laquelle le tube capillaire (3) débouche également.

2. Dispositif selon la revendication 1, caractérisé en ce que l'élément d'actionnement (4) comporte une partie de boîtier (12) avec laquelle le tube capillaire (3) est relié et sur laquelle le dispositif de fixation (14) agit.

3. Dispositif selon la revendication 1 ou 2, caractérisé en ce que le dispositif de fixation est réalisé comme un boîtier de fixation (14) qui entoure au moins partiellement l'élément d'actionnement (4) et vient en prise en dessous d'un prolongement réalisé sur l'élément d'actionnement (4).

4. Dispositif selon la revendication 3, caractérisé en ce que le boîtier de fixation (14) est composé d'au moins deux parties (16, 17) qui entourent la circonférence de l'élément d'actionnement (4) dans des sections respectives.

5. Dispositif selon la revendication 4, caractérisé en ce que les parties (16, 17) viennent en prise l'une avec l'autre au moyen de connexions de blocage instantané (18-21).

6. Dispositif selon la revendication 4 ou 5, caractérisé en ce que toutes les parties (16, 17) sont identiques.

7. Dispositif selon l'une des revendications 4 à 6, caractérisé en ce que le boîtier de fixation (14) comporte un oeillet de traction (15) formé en commun au travers de toutes les parties (16, 17).

8. Dispositif selon l'une des revendications 3 à 7, caractérisé en ce que le boîtier de fixation (14) recouvre la connexion entre le tube capillaire (3) et l'élément d'actionnement (4).

9. Dispositif selon l'une des revendications 1 à 8, caractérisé en ce que l'élément d'actionnement (4) est agencé dans une partie supérieure du boîtier (5) qui a une ouverture à la face d'extrémité (27) dans laquelle l'élément d'actionnement (4) est inséré, l'ouverture à face d'extrémité (27) étant entourée par un prolongement circonférentiel (28) interrompu par au moins une ouverture (29, 30) et le dispositif de fixation (14) ayant plusieurs éléments de prise (25, 26) correspondant au nombre d'ouvertures (29, 30), la largeur des éléments de prise (25, 26) représentant au plus la largeur des ouvertures (29, 30).

10. Dispositif selon la revendication 9, caractérisé en ce que le prolongement (28) présente sur son côté tourné vers l'intérieur de la partie supérieure de boîtier (5) une pluralité d'évidements (31) correspondant à la pluralité d'éléments de prise (25, 26).
